# EUROPEAN PATENT APPLICATION

(11) **EP 3 252 569 A1**
(43) Date of publication of application: **06.12.2017**
(21) Application number: 17183392.4
(22) Date of filing: 13.01.2003
(51) Int. Cl.: G06F 3/023, G06F 1/16, G06F 3/038

(54) **ELECTRONIC EQUIPMENT INCLUDING A TOUCH PAD AND A METHOD FOR CONTROLLING USAGE OF THE TOUCH PAD**

(30) Priority: 16.01.2002 JP 2002006841
(62) Divisional of application: 03000580.5
(71) Applicant: Kabushiki Kaisha Toshiba, Minato-ku Tokyo 105-8001 (JP)
(72) Inventor: Kojo, Akihiro, Tokyo, 105-8001 (JP); Yamazaki, Hiroshi, Tokyo, 105-8001 (JP)
(74) Representative: Henkel, Breuer & Partner

(57) **Abstract**

Electronic equipment including a touch pad and a method for controlling input operation from the touch pad with recognizing a permission state or a prohibition state of the touch pad in order to prevent unintended input operation. The Electronic equipment includes a keyboard unit and an EC. The keyboard unit includes a special key for generating an interruption to the EC. In accordance with the interruption, an event utility judges a factor of the interruption. If the factor of the interruption is judged as a permission or a prohibition of the usage of the touch pad, the event utility sends an instruction to EC for switching the touch pad to an enable state or a disable state in accordance with the usage permission or a prohibition.

## Description

### CROSS-REFERENCE TO RELATED APPLICATIONS

This application claims the benefit of priority from Japanese Patent Application No. 2002-6841, filed on January 16, 2002, which is hereby incorporated by reference in its entirety.

### FIELD OF THE INVENTION

The present invention relates to electronic equipment that includes a pointing means and to a method for controlling the pointing means. More particularly, embodiments consistent with the present invention relate to a personal computer including a pointing means, such as a touch pad and to a method for controlling the input from the pointing means by a special key.

### BACKGROUND OF THE INVENTION

Conventionally, electronic equipment, such as personal computers include keyboard unit unit as an input device. Usually, auxiliary input means, such as mouse, track ball, and touch pad stick pointing device, is used together with the keyboard unit unit in order to move indicators, such as a cursor or an icon displayed on a screen in a display unit and to perform operations, such as a selection or an execution by clicking or double clicking the pointing device.

In recent years, touch pad unit is widely used as a pointing device for a personal computer due to its operability. The touch pad can easily move a displayed pointer on a screen for a personal computer by moving a finger of a user in a wanting direction to move the pointer with touching a surface of the pad.

Usually, touch pad is positioned in an armrest portion of a main body of a personal computer, i.e., in front of keyboard unit unit of the personal computer. Accordingly, it easily happens to accidentally touch a hand of user on the pad surface during key input operations. By the accidental touch, a cursor may easily move in an unintended direction.

In order to prevent the unintended movement of the cursor from occurring, various techniques for prohibiting input operation from a touch pad by using utility software have been proposed. For example, Japanese Application Publication 10-133796, published May 22, 1998, discloses a technique for allowing the input operation from the touch pad only when no key input operation is detected during a predetermined time interval. However, this technique has a problem that a pointer will move due to the static electricity of a human body without touching the pad, if no key input status continues for a predetermined interval.

Further, Japanese Application Publication 2001-306246, published November 2, 2001, discloses a technique for providing a special button in a portion of the touch pad for switching validity and invalidity of the input signal from a touch pad. However, this technique also has a problem that a user must touch the special button even when a usual pad operation since the button has another function for instructing permission or prohibition of a signal input into the button unit which determines the touch pad operation. This technique has another problem that a careless input operation from the button will be accomplished since the switching of the permission and prohibition are performed by a stroke of the button part.

### SUMMARY OF THE INVENTION

The present invention intends to solve the above-mentioned problems. Accordingly, the present invention provides electronic equipment that can prevent the unintended input operation by the touch pad during a normal keyboard unit input operation. Also the electronic equipment consistent with the present invention can recognize as to the usability of the touch pad. Thus, the present invention provides electronic equipment and a method for controlling a pointing means that can prevent the touch pad from unintentionally inputting touch pad.

Consistent with the present invention, there is provided electronic equipment comprising:
a main unit body including various devices including a key board unit for operating the electronic equipment;
a display unit body rotatably coupled to the main unit body for providing a screen, the screen displaying a pointer;
means for operating the pointer displayed on the screen display;
means for instructing permission/prohibition of input operation from the operating means of the pointer; and
means for switching an operation/non-operation state of the pointing means in accordance with an instruction of the instructing means.

Also consistent with the present invention, there is provided a radio communication method for use with electronic equipment comprising
a main unit body including various devices including a key board unit for operating the electronic equipment, the key board unit including a plurality of push-down keys for inputting character sequences;
a display unit body rotatably coupled to the main unit body for providing a screen, the screen displaying a pointer;
pointing means provided on an upper surface of the main unit body in front of the key board unit for operating the pointer displayed on the screen;
instructing means for determining permission or prohibition of input operation from the pointing means; and
switching means for changing between an operation state and a non-operation state of the pointing means in accordance with determination of the instruction means.

Further consistent with the present invention, there is provided a radio communication method for use with electronic equipment comprising a main unit body including various devices including a key board unit for operating the electronic equipment, the key board unit including a plurality of push-down keys for inputting character sequences;
a display unit body rotatably coupled to the main unit body for providing a screen, the screen displaying a pointer;
pointing means for operating the pointer displayed on the screen, the pointer means may be placed in front of the key board unit on an upper surface of the main unit body;
a controller being coupled between the pointing means and an internal bus provided in the main unit body for transmitting input signals from the pointing means to the internal bus; the controller includes a first interface and a second interface connected to the internal bus, respectively;
instructing means for determining permission or prohibition of input operation from the pointing means; and
switching means for changing between an operation state and a non-operation state of the pointing means in accordance with determination of the instruction means;
whereby: the controller transmits signals inputted from the pointing means through the first interface to the instruction means, and receives a switching instruction from the instructing means through the second interface in order to switch an operation/non-operation state of the pointing means

Furthermore consistent with the present invention, there is provided a method for controlling operation of a pointer displayed on a screen for electronic equipment comprising a main unit body; a display unit body rotatably coupled to the main unit body for providing a screen; and pointing means provided on an upper surface of the main unit body for operating the pointer displayed on the screen; the method comprising:
generating an interruption when an input permission or an input prohibition is instructed from the pointing means;
discriminating whether the interruption permits input or prohibits input; and
setting the pointing means in a non-operation state or an operation state in accordance with the instruction from the pointing means.

### BRIEF DESCRIPTION OF THE DRAWINGS

The accompanying drawings, which are incorporated in and constitute part of this specification, illustrate various embodiments and/or features of the invention and together with the description, serve to explain the invention. Wherever possible, the same reference numbers will be used throughout the drawings to the same or like parts. In the drawings:
Figure 1 is a perspective view of an exemplary configuration for a personal computer in which methods and apparatus consistent with the present invention may be implemented.
Figure 2 is a functional block diagram of an exemplary circuit diagram for a personal computer in which methods and apparatus consistent with the present invention may be implemented.
Figure 3 is a detail functional block diagram of an exemplary circuit diagram for circuit configuration around the EC illustrated in Figure 2.
Figure 4 is a flowchart explaining a method for controlling touch pad consistent with the present invention.
Figure 5 is a perspective view of another exemplary configuration for a personal computer in which methods and apparatus consistent with the present invention may be implemented.
Figure 6 is a functional block diagram of an exemplary circuit diagram for a personal computer illustrated in Figure 5 in which methods and apparatus consistent with the present invention may be implemented.

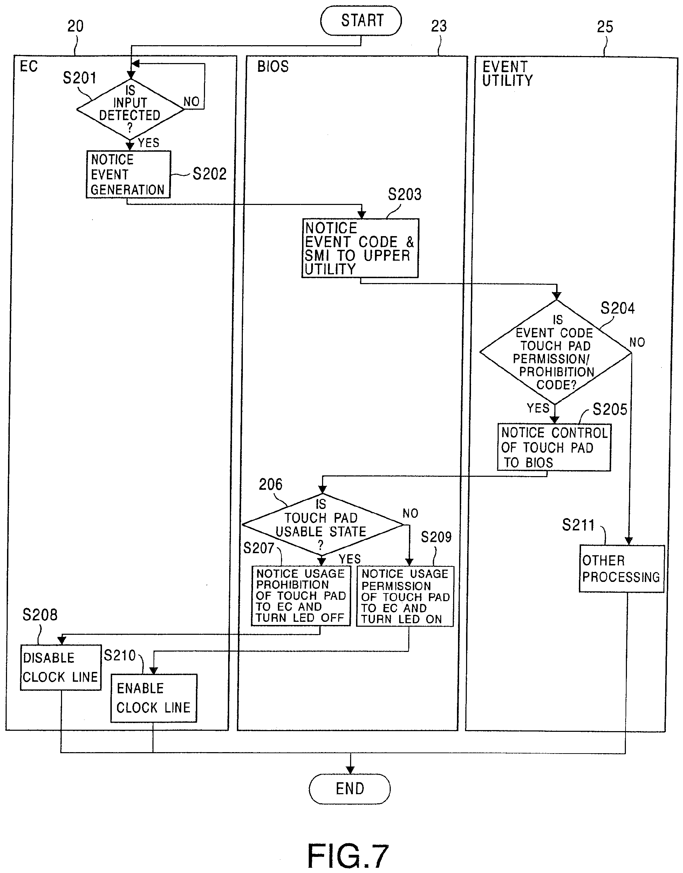

Figure 7 is a flowchart explaining a method for controlling touch pad consistent with the present invention.

### DETAILED DESCRIPTION

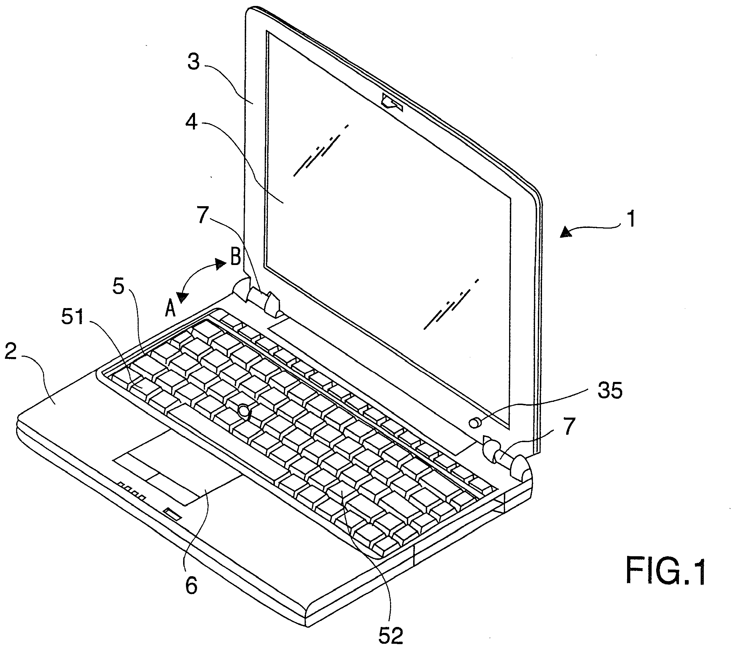

Reference will now be made in detail to the exemplary embodiments of the invention, examples of which are illustrated in the accompanying drawings. Wherever possible, the same reference numbers will be used throughout the drawings to refer the same or like parts. Figure 1 illustrates a personal computer 10 as electronic equipment consistent with the invention. The personal computer 1 includes a main unit body 2 and a display unit body 3. The display unit body 3 holds a screen display 4, such as an LCD panel, so that a displaying area is visible. A keyboard unit 5 is provided on an upper surface of the main unit body 2. One elongated side edge of the display unit body 3 is coupled to one elongated side edge of the main unit body 2 through hinge units 7. Thus, the display unit body 3 rotatably moves through the hinge 7 along A-B arrow directions to and from a display open position and a display closed position. Further, a touch pad 6 as a pointing device is provided in an armrest area, i.e., a front area of the keyboard unit 5 on the upper surface of the main unit body 2. When the display unit body 3 is closed, it covers the upper surface of the main unit body 2 to protect the keyboard unit 5 and the touch pad 6.

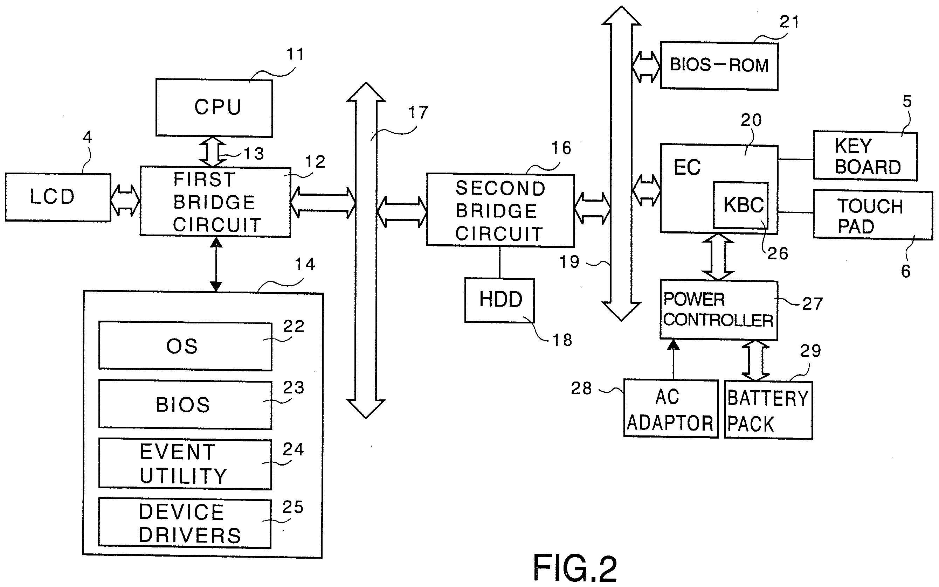

In general, operation of the personal computer is accomplished by electronic components located within the main unit body 2. For example, as illustrated in Figure 2, the main unit body 2 of the personal computer 1 includes a CPU 11 for controlling operational execution and data processing of the computer 1; a main memory 14 for storing for example, an Operating System (OS) 22, a BIOS 23, event utility software 24, various device drivers 25, and processed data; a display controller for the LCD panel 4; an HDD 18 as a storing/reproducing apparatus for data; and an embedded controller (EC) 20 for installing a plurality of register groups which may be read/written by the CPU 11. The main memory 14 includes, for example, a plurality of, such as, dynamic random access memories (DRAM).

OS 22 controls total operations of the hardware and the software in the personal computer 1. Also, OS 22 controls the utility right, such as an interrupting operation by the CPU 11. BIOS 23 stores systematized functional execution routines for accessing various devices in the personal computer 1. When personal computer 1 is generated, BIOS programs are read out from a BIOS-ROM 21 through the first and the second bridge circuits. Further, BIOS 23 stores a setup for saving the power supply to control drives for various devices. The event utility software 24 performs control instructions to BIOS 23 for executing a suitable process, such as an interruption, in accordance with an event generation from various devices.

The CPU 11 and the main memory 14 are respectively connected to a first bridge circuit 12 through a CPU local bus 13. The CPU local bus 13 includes a data bus of 64 bits in width. Usually, the first bridge circuit 12 and the main memory 14 are coupled using a memory bus. However, the CPU local bus 13 is used in the presently illustrated. Further, a display controller 15 is also connected to the first bridge circuit 12 through a data bus. Usually, the first bridge circuit 12 and the main memory 14 are coupled using a memory bus. However, the CPU local bus 13 is used in the presently illustrated embodiment. Further the LCD panel 4 is coupled to the first bridge circuit 12 through a display controller (not shown).

In the main unit body 2, the first bridge circuit 12 is coupled to a second bridge circuit 16 through a first bus 17. The first bus 17 includes a data bus of 32 bits in width. The hard disk drive (HDD) 18 is connected to the second bridge circuit 16. Further, the embedded controller (EC) 20 and a BIOS-ROM 21 are coupled to the second bridge circuit 16 through a second bus 19. The second bus 19 includes a data bus of 16 bits in width.

The first bridge circuit 12 is a bridge LSI for coupling between the CPU local bus 13 and the first bus 17, and it functions as one of the bus master devices for the first bus 17. The first bridge circuit 12 performs various functions, such as a function for converting bus width including data and addresses between the CPU local bus 13 and the first bus 17, and a function for controlling the main memory 14 through a memory bus. Further, the first bridge circuit 12 may function as a display controller for transmitting display data to the LCD panel 4 coupled through the first bridge circuit 12. The first bus 17 is a clock synchronization type input/output bus. Thus, whole cycles on the first bus 17 synchronize with a first bus clock. The first bus 17 further includes a time divisionally used address/data bus.

The second bridge circuit 16 is a bridge LSI for coupling between the first bus 17 and the second bus 19 in order to perform bus conversion between the first bus 17 and the second bus 19. Further, the second bridge circuit 16 installs an intelligent drive electronics device (IDE) controller for controlling the HDD 18 that is connected to the second bridge circuit 16 for using as a data storage/reproduction device. The second bridge circuit 16 is coupled to the EC 20 and the BIOS-ROM 21 through the second bus 19.

The EC 20 installs a plurality of register groups that may be read/written by CPU 11. By using these register groups, it is possible to communicate between the CPU 11 and the EC 20. The EC 20 may further function as a keyboard unit controller (KBC) 26. Further the EC 20 couples to a power controller 27 The power controller 27 is coupled to an AC adaptor 28 for driving the personal computer 1 by supplying a commercial power source. Thus, the AC adaptor 28 is connected to the commercial power source. Further, the power controller 27 controls ON/OFF operation of power source for the personal computer 1. Also, the power controller 27 controls charging operation for a battery pack 29 as a secondary power for supplying power when the primary power supplied through the AC adaptor 28 shut down. Further, EC 20 is connected to the input interfaces, i.e., a keyboard unit 5 and a touch pad 6, respectively. The input signals through the keyboard unit 5 or the touch pad 6 are converted by the KBC 23 for processing by the devices in the computer.

The BIOS-ROM 21 stores system programs of functional routines for accessing various devices provided in the personal computer 1. When the personal computer 1 is starting up, the BIOS program is read out. Generally, the BIOS program is stored in a non-volatile memory, such as a flash ROM, in the personal computer 1.

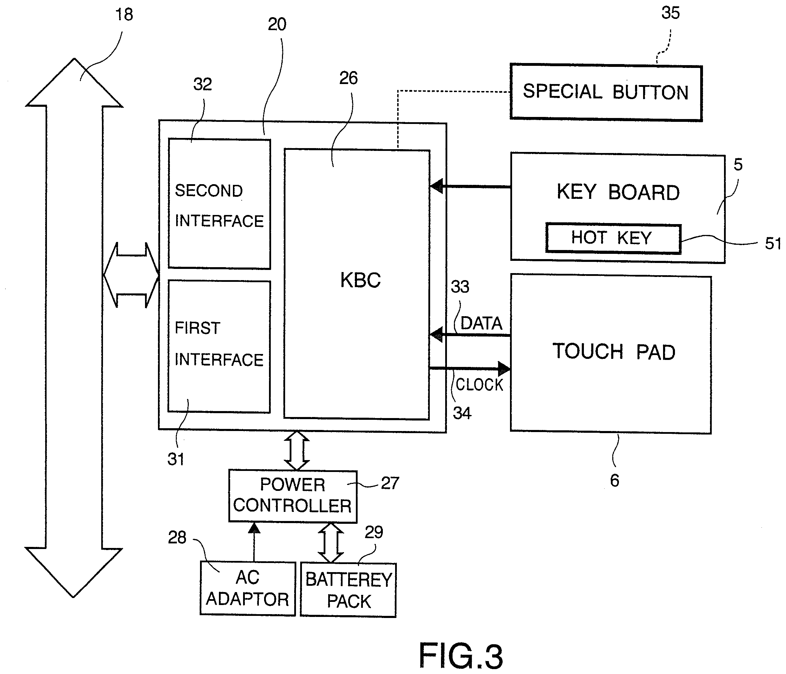

Electronic equipment consistent with the present invention, as illustrated in Figure 3, the EC 20 includes s a first interface 31 and a second interface 32 that are respectively coupled to the second bus 19. The touch pad 6 connected to the EC 20 is physically connected the Personal System/2 (PS/2) through a data line 33 and a clock line 34. The first interface 31 is used by PS/2 drivers that include a touch pad driver.

According to this embodiment consistent with the present invention, the second interface 32 is provided as an exclusive access interface for the BIOS 23. Thus, the second interface 32 is an exclusive interface used for performing the control from BIOS 23. By providing such an exclusive access interface, it becomes possible to avoid a conflict between BIOS 23 and PS/2 device drivers. On the contrary, the conventional personal computer includes only one access interface. Consequently, if a conflict has occurred BIOS 23 and PS/2 device drivers, it has needed to re-start the computer. According to the personal computer consistent with the present invention, it becomes possible to perform a switching operation of a usage permission/prohibition of the touch pad 6. Consequently, it does not need to restart the personal computer 1 even when such a conflict between BIOS 23 and PS/2 device drivers has occurred.

To instruct such a usage of permission/prohibition of the touch pad 6, it is also possible, as illustrated in Figure 3, to provide a special button 35 for instructing to switch the permission/prohibition of the touch pad 6. According to the embodiments consistent with the present invention, in order to perform the usage control operation of the permission/prohibition for the touch pad 6, a user pushes down a particular key, such as a function (F) key 51 or a question (?) key 52 (hereinafter referred to as a "hot key") that is provided in the keyboard unit 5 or the main unit body 2. Further, it is also possible to perform the usage control operation of the permission/prohibition for the touch pad 6 by pushing down the special button 35 that may be provided on the display unit body 3.

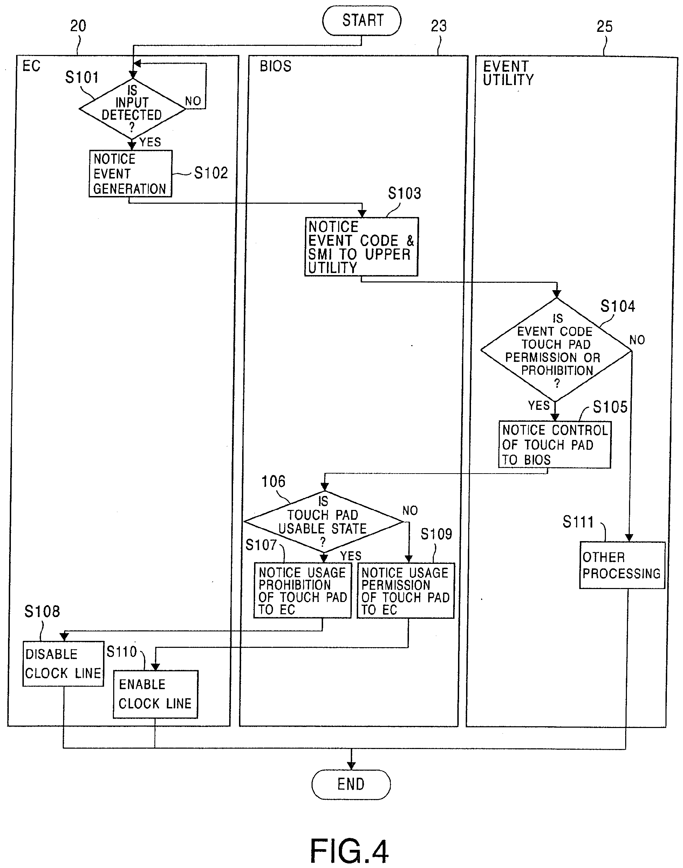

With reference to the flowchart illustrated in Figure 4, how to control of the usage of the permission/prohibition of the touch pad 6 is explained. When an input from the hot key 51 provided in the keyboard unit 5 or the special button 35 provided on the display unit body 3 is detected (step S101, YES), the EC 20 generates an interruption signal in order to inform an occurrence of an event of the pushing-down of such the special key 35 to the BIOS 23 (step S102).

When the interruption from the EC 20 is detected, the BIOS 23 notices the event code and the system management interrupt (SMI) operation to an event utility 25 (step S103). The event utility 25 judges what event has occurred in accordance with the event code received from the BIOS 23. If the event utility 25 judges that the event code number is to instruct the permission/prohibition of the touch pad 6 due to a pushing-down operation of the hot key 51 or the special button 35 (step S104, YES), the event utility 25 sends an instruction to the BIOS 23 for performing the permission/prohibition control of the touch pad 6 (step S105).

When the permission/prohibition control of the touch pad 6 is received from the event utility 25, the BIOS 23 judges whether the touch pad 6 is now under a using state or not. If it is judged that the touch pad 6 is presently in a using state (step S106, YES), the BIOS 23 delivers an instruction for prohibiting the usage of the touch pad 6 to the exclusive-use second interface 32 in the EC 20 (step S107). When the second interface 32 receives the usage prohibition of the touch pad 6, the EC 20 makes the clock line 34 connected to the touch pad 6 disable in order to shift into an input prohibition status (step S108). To make the touch pad 6 disable, the signal status on the clock line 34 is made to a low state. By keeping the clock line 34 at the low state, input signal data 33 from the touch pad 6 are prohibited to input into the KBC 23.

If it is judged that the touch pad 6 is now in a non-use state (step S106, NO), the BIOS 23 delivers an instruction for permitting the usage of the touch pad 6 to the exclusive-use second interface 32 in the EC 20 (step S109). When the second interface 32 receives the usage permission of the touch pad 6, the EC 20 makes the clock line 34 enable in order to shift into an input permission status (step S110). To make the touch pad 6 enable, the signal status on the clock line 34 is released from the low state.

If the event utility 25 judges that the event code number does not instruct the permission/prohibition of the touch pad 6 (step S104, NO), the event utility 25 performs other process in accordance with the event code (step S111). Since the other process is not essential for the operation of the personal computer consistent with the present invention, the detail explanations are omitted.

As explained above, this embodiment, which is consistent with the present invention, changes the clock line 34 between the enable and the disable to permit or prohibit the input operation from the touch pad 6. It is also possible to directly instruct the change of the touch pad 6 from the BIOS 23. Thus, if usage of the touch pad 6 is prohibited, the input signals from the touch pad 6 are destroyed in the EC 20 in order to prevent the upper devices from transmitting the data.

This embodiment, which is consistent with the present invention, can change the usage permission/prohibition of the touch pad 6 by pushing down the hot key 51 or the special button 37. It is further possible to change the usage permission/prohibition of the touch pad 6 by using a graphical user interface (GUI) button displayed on the screen panel 4. The GUI button is displayed by software. It becomes possible to switch the permission/prohibition of the touch pad 6 by pushing or clicking the displayed GUI button.

Thus, according to this embodiment consistent with the present invention, it becomes possible to avoid conflicts among various drivers by providing an exclusive-use second interface 32 for the interface touch pad 6 in the EC 20. Consequently, it becomes possible to switch into an status for prohibiting unintended inputs from the touch pad 6 without restarting operation of the equipment.

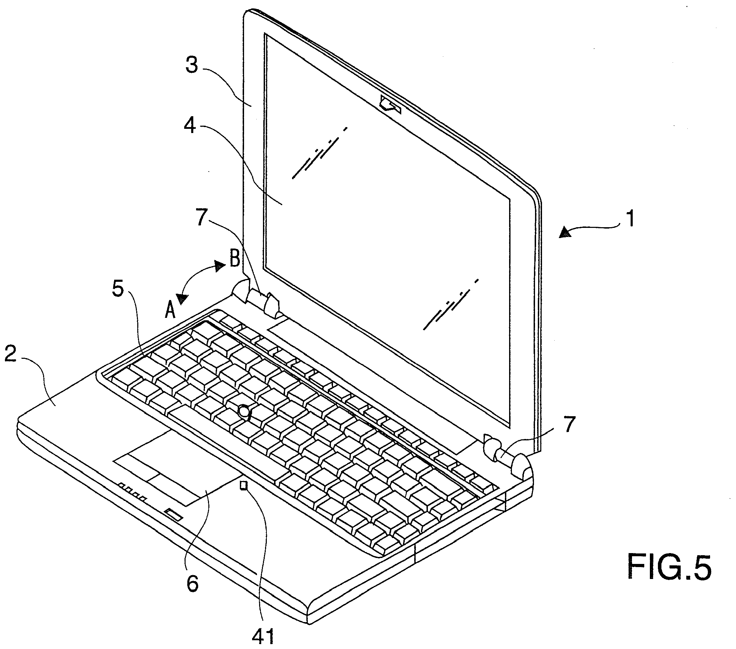

Figure 5 illustrates a second embodiment consistent with the present invention. With reference to Figure 5, a personal computer 1 includes a main unit body 2 and a display unit body 3 that holds an LCD panel 4. The display unit body 3 rotatably moves through the hinge 7 along A-B arrow directions to and from a display open position and a display closed position. A keyboard unit 5 is provided on an upper surface of the main unit body 2. Further, a touch pad 6 as a pointing device is provided in a front area of the keyboard unit 5 on the upper surface of the main unit body 2.

Further, according to this embodiment, a discrimination unit 41, such as an light emitting diode (LED), is provided in order to notify a prohibition status of the touch pad 6 to a user. The discrimination unit 41 is provided at a position that goes into a user's view during operation of the touch pad 6. For example, in Figure 5, LED 41 is provided near to the touch pad 6 on an arm pad area of the upper surface of the main unit body 2.

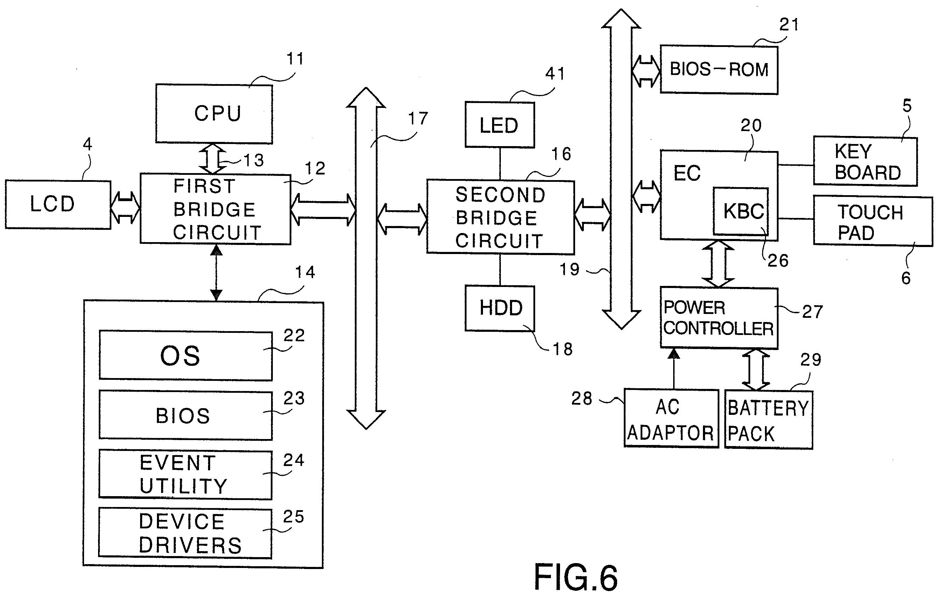

As illustrated in Figure 6, the discrimination unit (LED) 41 is connected a second bridge circuit 16. Thus, the second bridge circuit 16 couples between a first bus 17 and a second bus 19 in order to perform bus conversion between the first bus 17 and the second bus 19. Further, the second bridge circuit 16 installs an IDE controller for controlling a HDD 18 that is connected to the second bridge circuit 16 as a data storage/reproduction device. The second bridge circuit 16 is coupled to a EC 20 and a BIOS-ROM 21 through the second bus 19.

The EC 20 may function as a keyboard unit controller (KBC) 26. Further the EC 20 is connected to input interfaces, such as, a keyboard unit 5 and a touch pad 6, respectively. The input signals through the keyboard unit 5 or the touch pad 6 are converted by the KBC 23 for processing by the devices in the computer.

A CPU 11 and a main memory 14 are respectively connected to a first bridge circuit 12 through a CPU local bus 13. Further, a display controller 15 is also connected to the first bridge circuit 12 through a data bus. Further the LCD panel 4 is coupled to the first bridge circuit 12 through a display controller (not shown). In the main unit body 2, the first bridge circuit 12 is coupled to a second bridge circuit 16 through a first bus 17. An EC 20 and a BIOS-ROM 21 are coupled to the second bridge circuit 16 through a second bus 19. The first bridge circuit 12 functions as one of the bus master devices for the first bus 17. The first bridge circuit 12 performs various functions, such as a function for converting bus width including data and addresses between the CPU local bus 13 and the first bus 17, and a function for controlling the main memory 14 through a memory bus. Further, the first bridge circuit 12 may function as a display controller for transmitting display data to the LCD panel 4 coupled through the first bridge circuit 12. The first bus 17 is a clock synchronization type input/output bus. Thus, whole cycles on the first bus 17 synchronize with a first bus clock.

Figure 6 explains the permission/prohibition control process of the touch pad 6. As similar to Figure 4, when an input from the hot key 51 provided in the keyboard unit 5 or the special button 35 provided on the display unit body 3 is detected (step S201, YES), the EC 20 generates an interruption signal in order to inform an occurrence of an event of the pushing-down of such the special key 35 to the BIOS 23 (step S202). When the interruption from the EC 20 is detected, the BIOS 23 notices the event code and the SMI operation to an event utility 25 (step S203). The event utility 25 judges what event has occurred in accordance with the event code received from the BIOS 23. If the event utility 25 judges that the event code number is to instruct the permission/prohibition of the touch pad 6 due to a pushing-down operation of the hot key 51 or the special button 35 (step S204, YES), the event utility 25 sends an instruction to the BIOS 23 for performing the permission/prohibition control of the touch pad 6 (step S205).

When the permission/prohibition control of the touch pad 6 is received from the event utility 25, the BIOS 23 judges whether the touch pad 6 is now under a using state or not. If it is judged that the touch pad 6 is presently in a using state (step S206, YES), the BIOS 23 delivers an instruction for prohibiting the usage of the touch pad 6 to the exclusive-use second interface 32 in the EC 20 and also delivers an instruction to turn the discrimination unit (LED) 41 off (step S207). When the second interface in the EC 20 receives the usage prohibition of the touch pad 6, the EC 20 makes the clock line connected to the touch pad 6 disable in order to shift into an input prohibition status (step S208). By keeping the clock line connecting between the KBC 26 and the touch pad 6 at a low state, input signal data 33 from the touch pad 6 are prohibited to input into the KBC 23.

If it is judged that the touch pad 6 is now in a non-use state (step S206, NO), the BIOS 23 delivers an instruction for permitting the usage of the touch pad 6 to the exclusive-use second interface in the EC 20 and also delivers an instruction to turn the discrimination unit (LED) 41 on (step S209). When the second interface receives the usage permission of the touch pad 6, the EC 20 makes the clock line 34 enable in order to shift into an input permission status (step S210). To make the touch pad 6 enable, the signal status on the clock line connecting between the KBC 26 and the touch pad 6 is released from the low state.

As explained above, according to this embodiment, which is consistent with the present invention, a user can recognize the permission/prohibition status of the touch pad 6 by viewing the LED 41. Thus, it becomes possible to visually judge whether the touch pad can be used at a present time without confusing a user.

Of course, it is possible to construct as a discrimination unit 41 other than by providing the LED. For example, it is also possible to construct a portion of the touch panel by a half- translucent material and to provide a luminescence unit of two or more colors underneath the half-translucent portion of the touch panel. Thus, the touch panel portion is lighted up by a different color from the under surface, a user can visually recognize the permission/prohibition status of the touch panel dependent with the lighted color.

Further, it is possible to store the permission/prohibition information of the touch pad usage into the BIOS-ROM 21 in order to succeed the information on touch pad that can be used when the personal computer is re-started.

Thus, according to the present invention, it becomes possible for a user to set the input permission/prohibition state for the touch pad by switching a hot key. Also it becomes possible to visually recognize the input permission/prohibition state for the touch pad by light up a portion of the touch pad with a different color.

As explained above, the described electronic equipment and method for switching the input permission/prohibition state of the touch pad may reduce confusion of input operation from the touch pad. Thus, embodiments consistent with the present invention provide electronic equipment with a higher operability of data input and pointing operations.

Other embodiments of the invention will be apparent to those skilled in the art from consideration of the specification and practice of the invention disclosed herein. It is intended that the specification and examples be considered as exemplarly only, with a true scope and sprit of the invention being indicated by the following claims.

## Claims

1. An electronic equipment, comprising:
a main unit body (2) including a key board unit (5) and a touch pad 6 respectively for operating the electronic equipment, the key board unit (5) and the touch pad (6) are provided on the main unit body (2);
a display unit body (3) rotatably coupled to the main unit body (2) via a hinge (7) and having a screen display unit (4) ;
an input interface (20) which is connected with the key board unit (5) and the touch pad (6);
instructing means (35) which outputs an interruption signal to set the touch pad (6) in an enable state or a disable state;
an utility means (24) which sets the touch pad (6) in the enable state or the disable state via the input interface (20), when the interruption signal is received from the instructing means (35); and
discriminating means (41) for visually displaying the enable state or the disable state set for the touch pad (6).

2. The electronic equipment according to claim 1, wherein
the discriminating means (41) is provided near the touch pad (6) at a surface portion of main unit body (2), and is turn on when the touch pad (6) is in the enable state and is turn off when the touch pad (6) is in the disable state.

3. The electronic equipment according to claim 1, further comprising:
a register to store the enable state or the disable state of the touch pad (6) so that information of the enable state or the disable state of the touch pad can be succeeded when the electronic equipment is re-started.

4. The electronic equipment according to claim 1, wherein
the input interface (20) destroys an input signal from the touch pad (6) when the touch pad is set in a disable state.
